# EUROPÄISCHE PATENTSCHRIFT

(11) **EP 0 551 281 B1**
(45) Veröffentlichungstag und Bekanntmachung des Hinweises auf die Patenterteilung: **30.11.1994**
(21) Anmeldenummer: 91913345.4
(22) Anmeldetag: 01.08.1991
(51) Int. Cl.: G01N 21/88, G01B 11/30, G02B 26/10

(54) **VERFAHREN ZUM OPTISCHEN ABTASTEN DER OBERFLÄCHE EINES OBJEKTES, DESSEN OBERFLÄCHE LICHT ZU REFLEKTIEREN ODER ZU STREUEN IMSTANDE IST UND VORRICHTUNG HIERZU**
PROCESS FOR OPTICALLY SCANNING THE SURFACE OF AN OBECT, THE SURFACE OF WHICH CAN REFLECT OR SCATTER LIGHT, AND DEVICE THEREFORE
PROCEDE DE BALAYAGE OPTIQUE DE LA SURFACE D'UN OBJET DONT LA SURFACE EST EN MESURE DE REFLECHIR OU DE DIFFUSER LA LUMIERE, ET DISPOSITIF A CET EFFET

(30) Priorität: 02.08.1990 DE 4024546
(43) Veröffentlichungstag der Anmeldung: 21.07.1993
(73) Patentinhaber: Birkle Sensor GmbH + Co., D-73525 Schwäbisch Gmünd (DE)
(72) Erfinder: BIRKLE, Gebhard, D-7750 Konstanz (DE)
(74) Vertreter: Mierswa, Klaus, Dipl.-Ing.
(86) Internationale Anmeldenummer: DE9100619
(87) Internationale Veröffentlichungsnummer: WO9202805

(56) Entgegenhaltungen:
- EP-A- 279 347
- WO-A-89/05468
- DE-A- 3 601 442
- DE-A- 3 822 303

## Beschreibung

### Technisches Gebiet:

Die Erfindung betrifft ein Verfahren zum optischen Abtasten der Oberfläche eines Objektes, dessen Oberfläche Licht zu reflektieren oder zu streuen imstande ist, insbesondere zylindrisches Objekt, gemäß dem Oberbegriff des Anspruchs 1 und eine Vorrichtung zur Durchführung des Verfahrens.

### Stand der Technik:

Durch die DE 38 22 303 Al bzw. die WO 89/05468 ist eine Vorrichtung zum optischen Abtasten der Oberfläche eines bewegbaren Objektes bekanntgeworden, dessen Oberfläche Licht zu reflektieren oder zu streuen imstande ist, mit einer Lichtquelle und einem optischen, innen verspiegelten Ringspiegel mit einer umlaufenden Spiegelfläche und einer dazu zentrisch angeordneten Durchgangsöffnung zum Durchgang des Objektes durch den Ringspiegel, wobei in Richtung der Hauptachse des Ringspiegels, innerhalb dessen Öffnungswinkels und über dessen Durchgangsöffnung sich ein weiterer Spiegel befindet und mit einem optoelektronischen Sensor und einer elektrischen Auswerteeinrichtung, wobei das Licht nach Reflexion oder Streuung am Objekt auf die Spiegelflächen der Spiegel geworfen, auf den Sensor gelenkt und in der Auswerteeinrichtung ausgewertet wird. Die Lichtquelle beleuchtet das Objekt rings des Umfangs im Bereich der Durchgangsöffnung des Pultspiegels, so daß das vom Objekt rings des Umfangs reflektierte oder gestreute Licht gleichzeitig peripher auf die Spiegelfläche des Pultspiegels fällt. Der zweite Spiegel besitzt eine schräge Spiegelfläche, die das Licht auf den Sensor leitet, der ein Umfangsband detektiert, das einer Umfangsfläche des Objektes von vorgegebener Breite entspricht.

Durch die DE 36 01442 Al ist eine Vorrichtung zum optischen Abtasten eines Objektes bekanntgeworden, bestehend aus einer Lichtquelle, die einen Lichtstrahl erzeugt, der mittels einer rotierenden Umlenkoptik auf das Objekt geworfen und anschließend nach Reflektion einer Auswerteeinrichtung zugeführt wird. Die Umlenkoptik besteht aus einem Prisma, das bezüglich der Rotationsachse eine schrägstehende Spiegelfläche besitzt, die das Licht auf einen ringförmigen Hohlspiegel wirft, wobei sich das Objekt innerhalb des Öffnungswinkels des Hohlspiegels befindet. Unterhalb des Hohlspiegels kann ein zweiter ringförmiger Spiegel angeordnet sein, der den Strahlengang des Lichtes senkrecht auf das Objekt umlenkt.

Soweit bei derartigen Abbildungssystemen in der Bildebene Ring- oder Flächensensoren zur Anwendung kommen, werden zwar beleuchtungs- und abbildungstechnisch optimale Bedingungen für eine Merkmalserkennung an runden, insbesondere zylindrischen, Objekten erreicht, jedoch sind der Umfangsauflösung Grenzen gesetzt: bei begrenzter Pixelzahl des Bildsensors bei Verwendung eines CCD-Zeilensensors nimmt mit zunehmendem Durchmesser des Objektes die Umfangsauflösung linear ab. Für feinauflösende Signalerzeugungen an Objekten mit größerem Durchmesser, zum Beispiel ein Motorkolben mit einem Duchmesser von ca. 100 mm, ist es daher erforderlich, von der Bindung an eine ringförmige Pixelanordnung oder von einem Auslesen aus einem CCD-Flächensensor wegzukommen.

### Technische Aufgabe:

Der Erfindung liegt die Aufgabe zugrunde, ein Verfahren und eine Vorrichtung der genannten Gattung zu schaffen, mit der die Oberfläche von Objekten mit relativ großem Durchmesser, welche vorzugsweise rund oder zylindrisch sind, ohne Anwendung eines Ringsensors oder ohne Auslesen aus einem Flächensensor, mit hoher Umfangsauflösung abgetastet werden kann.

### Darstellung der Erfindung und deren Vorteile:

Die Lösung der Aufgabe besteht erfindungsgemäß darin, daß als Sensor ein geradliniger optoelektronischer Zeilensensor verwendet wird, daß zwischen dem Objekt und dem Zeilensensor eine Bilddrehungsoptik angeordnet ist, die einerseits die Abtastung von aufeinanderfolgenden Umfangsbereichen des Objektes zeitlich nacheinander bewirkt und andererseits die Drehung des von dem Abbildungsobjektiv erzeugten Abbildes des Zeilensensors auf dem Objektumfang derart kompensiert, daß das Abbild des Zeilensensors auf dem Objektumfang unabhängig vom Drehwinkel (d.h. unabhängig vom gerade abgetasteten Bereich auf dem Objekt) in bezug auf die Längsachse stets dieselbe Orientierung hat, vorzugsweise parallel zur Längsachse des Objektes geführt wird.

Der Strahlengang des Abbildungs-Lichtbündels wird gemeinsam gedreht und das Abbild des mittels des Abbildungsobjektivs auf dem Objekt virtuell abgebildeten Sensors parallel zur Achse des Objektes um den Umfang desselben herumgeführt, wobei die Drehung des Strahlenganges des Abbildungs-Lichtbündels objektseitig vor oder nach dem Abbildungsobjektiv erfolgt. Die Umlenkung des Beleuchtungs-Lichtbündels im wesentlichen radial zur Hauptachse des Objektes meint die Aufweitung innerhalb eines kleinen Winkels der Breite des Umfangsbandes.

Das erfindungsgemäße Verfahren besitzt den Vorteil, daß dadurch zylindrische oder runde Objekte, die durchscheinend, durchsichtig oder undurchsichtig sein können, aber deren Oberfläche Licht zu reflektieren oder zu streuen imstande ist, und die einen relativ großen Durchmesser aufweisen können, beispielsweise mehr als 50 mm, mit feinauflösender Signalerzeugungen abgetastet werden können. Die einzelnen Bildpunkte der Sensorzeile können mit hoher Frequenz, z.B. 5 MHz, durchgetaktet werden, was z. B. bei 500 Sensorpixeln einer Zeilenabtastfrequenz von 10 KHz entspricht. Hingegen kann die Drehgeschwindigkeit der Bilddrehungseinrichtung bzw. der Bilddrehungsoptik relativ gering sein, z.B. 10 oder 20 U/sec oder mehr, so daß eine hohe Umfangsauflösung erreicht wird.

Vorteilhaft können das Beleuchtungs-Lichtbündel mittels einer Blende konfiguriert und das konfigurierte Beleuchtungs- als auch das Abbildungs-Lichtbündel synchron gedreht werden. In diesem Fall ist es vorteilhaft, wenn beim Drehen des Strahlenganges des Abbildungs-Lichtbündels objektseitig vor dem Abbildungsobjektiv sowohl das Beleuchtungs- als auch das Abbildungs-Lichtbündel durch die Bilddrehungsoptik fallen. Die Lichtquelle kann eine strichförmige, ausgeleuchtete Schlitzblende aufweisen, deren Licht über die Beleuchtungsoptik auf die Oberfläche des Objektes geleitet wird, so daß eine installierte Lichtleistung allein auf den Abtastbereich konzentriert wird und mit dem virtuellen Abbild der Sensorzeile synchron mitläuft.

Für die Detektion von Mustern auf einem Objekt kann es vorteilhaft sein, die Sensorzeile so zu positionieren, daß das Abtastmuster auf dem Objekt schräg zu seiner Mittelachhse liegt; in der Bildebene schneidet dann die Sensorzeile bzw. deren Verlängerungsgerade die Hauptachse der Bilddrehungsoptik bzw. der Abbildungs- und Bilddrehungsoptik nicht. Für die Detektion bestimmter Muster auf einem Prüfobjekt kann es vorteilhaft sein, einen Flächensensor einzusetzen.

In vorteilhafter Weise können mit dem erfindungsgemäßen Verfahren auch Rundungsfehler an zylindrischen oder runden Objekten festgestellt werden.

Eine erfindungsgemäße Vorrichtung ist dadurch gekennzeichnet, daß der Sensor ein geradliniger optoelektronischer Zeilensensor ist und daß zwischen dem Objekt und dem Zeilensensor zum Drehen des Strahlenganges des Abbildungs-Lichtbündels objektseitig vor oder nach dem Abbildungsobjektiv eine Bilddrehungsoptik sich befindet, welche um ihre Hauptachse drehbar angeordnet ist.

Die Bilddrehungsoptik kann eine Spiegeleinrichtung oder eine Kombination von Zylinderlinsen oder eine Kombination von Zylinderlinsen mit sphärischen Linsen oder ein Pechan- oder Dove-Prisma sein, die bzw. das mittels eines Motors drehbar um ihre bzw. seine Hauptachse angeordnet ist, die mit der Hauptachse des Strahlengangs des Abbildungs-Lichtbündels zusammenfällt. Des weiteren kann das Abbildungsobjektiv in die Kombination von Zylinderlinsen oder die Kombination von Zylinderlinsen mit sphärischen Linsen zur Bilddrehung integriert sein.

Vorteilhaft befindet sich das Abbildungsobjektiv objektseitig vor der Bilddrehungsoptik, wobei sowohl das Beleuchtungs-Lichtbündel als auch das Abbildungs-Lichtbündel durch die Bilddrehungsoptik geführt werden können.

Die Lichtquelle weist eine auf die Sensorgeometrie abgestimmte Blende auf, die zum Beispiel bei einem linienförmigen Sensor schlitzförmig ist; Blende und Sensorzeile sind diametral zur Mittenachse der Bilddrehungsoptik bzw. der Abbildungs- und Bilddrehungsoptik angeordnet. Der Sensor kann ein solcher mit parallelen Zeilen sein oder besteht aus mehreren Sensorzeilen, die sternförmig angeordnet sind. Die gleichzeitige Drehung des Lichtblendenbildes (Beleuchtung) und des Oberflächenbildes (Sensorzeile) kann als Durchlichteinrichtung für transparente Objekte, wie zylindrische Glasröhren, variiert werden, indem die schlitzförmige Beleuchtungsblende und die Sensorzeile diametral zur Mittenachse der Bilddrehungsoptik bzw. der Abbildungs- und Bilddrehungsoptik angeordnet sind.

In weiterer vorteilhafter Ausgestaltung unter Verwendung eines CCD-Zeilensensors als optoelektronischen Sensor durchstößt die Hauptachse der Bilddrehungsoptik mittig die Sensorzeile, die symmetrisch zur Hauptachse in der Bildebene liegt, so daß ein zentraler Bereich des Sensors der Stirnfläche des Objektes und die beiden sich diametral gegenüberliegenden Außenbereiche des Sensors der Mantelfläche des Objektes zugeordnet sind und auf derselben zu liegen kommen.

Ebenso kann die Sensorzeile soweit außermittig der Hauptachse der Bilddrehungsoptik angeordnet sein, daß die Hauptachse nur noch die Verlängerungsgerade der Sensorzeile schneidet und somit das Abbild der Sensorzeile nur noch eine Abtastgerade auf der Mantelfläche des Objektes ergibt.

Ebenso kann der Sensor bzw. die Sensorzeile des Sensors außermittig und schräg zur Hauptachse der Bilddrehungsoptik liegen, so daß in der Bildebene die Sensorzeile bzw. deren Verlängerungsgerade die Hauptachse der Bilddrehungsoptik nicht schneidet und in der Objektebene das Abbild der Sensorzeile auf dem Objekt schräg zu dessen Mittelachse zu liegen kommt.

Mittels einer sternförmigen Anordnung mehrerer Pixelzeilen in der Bildebene können auf das Objekt mehrere Abtastgeraden projiziert werden, die bei der Bilddrehung äquidistant um das Objekt drehen. Eine weitere Variante ist eine gerade Pixelzeile, von der lediglich zwei außenliegende Äste für die Abtastung aktiviert werden. Die Verwendung einer rotierenden Bilddrehungsoptik ermöglicht des weiteren einen einfachen Aufbau der erfindungsgemäßen Vorrichtung.

### Kurzbeschreibung der Zeichnung, in welcher zeigen:

- Figur 1: eine schematische Darstellung der Vorrichtung mit einem ringförmigen Spiegelkörper, einem Abbildungsobjektiv und einem drehbar um seine Hauptachse angeordneten Pechan-Prisma zur Bilddrehung sowie einem CCD-Sensor, der symmetrisch zur Hauptachse angeordnet ist
- Figur 2: eine schematische Darstellung entsprechend der Figur 1, wobei der CCD-Sensor unsymmetrisch zur Hauptachse angeordnet ist
- Figur 3: eine Darstellung einer Vorrichtung entsprechend Figur 1 mit einem Dove-Prisma
- Figur 4: einen Teilausschnitt des Ringspiegels in Form eines transparenten Spiegelkörpers als Toroid mit einer zylinderförmigen umlaufenden Linsenfläche zur Verlagerung des geometrischen Ortes der Schnittpunkte sämtlicher Randstrahlen auf die Oberfläche des abzutastenden Objektes und
- Figur 5: einen Teilausschnitt eines weiteren Ringspiegels in Form eines transparenten Spiegelkörpers als Toroid mit einer konvex gekrümmten, umlaufenden Linsenfläche zur angepaßten Korrektur des Verlaufs des geometrischen Ortes der Strahlen des Lichtbündels auf dem Objekt in bezug auf die Geometrie des optoelektronischen Sensors.

### Wege zur Ausführung der Erfindung:

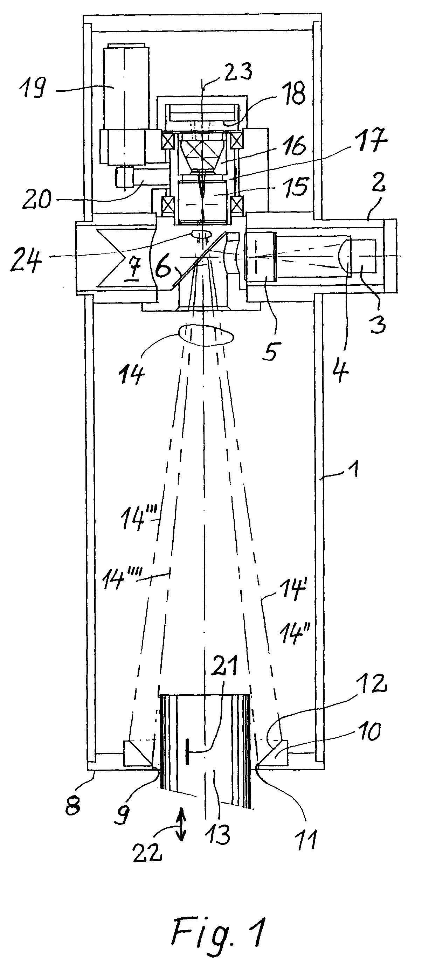

Figur 1 zeigt in schematischer Darstellung eine erfindungsgemäße Vorrichtung im Längsschnitt, bestehend aus einem länglichen, geschlossenen Gehäuse 1, welches zylinderförmig sein kann und welches im oberen Teil einen seitlich angeordneten Gehäusearm 2 aufweist, in dem eine Lichtquelle 3, z.B. mit einer Blende 4, angeordnet ist, die zur Querschnittswandlung und Erzeugung eines Lichtaustrittes dient, dessen geometrische Gestalt der Geometrie der Oberfläche eines optisch abzutastenden Objektes 13 und gleichermaßen auf die Abmessungen der lichtempfindlichen Sensorfläche eines optoelektronischen linienförmigen Sensors 18 abgestimmt sein können. Durch das geschlossene Gehäuse wird vorzugsweise ein Dunkelfeld zur optischen Abtastung realisiert.

Auf die Blende 4 folgt eine Beleuchtungs- oder Projektionsoptik 5, die z.B. ein Objektiv sein kann. Nach der Beleuchtungsoptik 5 ist eine Strahlteilereinrichtung 6 vorgesehen, die beispielsweise ein Teilerspiegel oder eine holographische Linse oder ein Strahlteilerprisma oder -würfel sein kann. Hinter der Strahlteilereinrichtung 6 ist eine Lichtfalle 7 angeordnet, um eine Lichteinstreuung in den Abbildungsstrahlengang zu vermeiden. Das Gehäuse 1 besitzt an seinem unteren Ende einen Deckel 8 mit einem zentrischen Loch 9, auf dem sich innerhalb des Gehäuses 1 ein ringförmiger Spiegelkörper 10, z.B. ein Ringspiegel, mit einer kegel- oder schalenförmige, umlaufende Spiegelfläche 12 befindet. Der Spiegelkörper 10 besitzt zentrisch zu seiner Hauptachse 23 eine Durchgangsöffnung 11 zum Durchbewegen des Objektes 13 in das Innere des Gehäuses 1, wobei das Loch 9 innerhalb des Deckels 8 und die Durchgangsöffnung 11 des Spiegelkörpers 10 kongruent sind.

Im oberen Teil des Gehäuses 1 und oberhalb der Strahlteilereinrichtung 6 befindet sich ein Drehgehäuse 17 in Form eines aufrechtstehenden, rohrförmigen Zylinders, innerhalb desselben ein Abbildungsobjektiv 15 und eine Bilddrehungsoptik 16, die im gezeigten Beispiel ein Pechan-Prisma ist, übereinander angeordnet sind, deren Hauptachsen mit der Hauptachse 23 des Spiegelkörpers 10 zusammenfallen. Das Abbildungsobjektiv 15 ist an der Bilddrehung nicht beteiligt, obwohl es sich in der Anordnung mitdreht. Daran schließt sich ein optoelektronischer Sensor 18 an, der vorzugsweise ein CCD-Zeilen- oder Matrix-Sensor mit linienförmiger Zeile oder linienförmigen Zeilen oder parallelen linienförmigen Zeilen ist. Die optische Hauptachse des Pechan-Prismas 17 durchstößt die Mitte der Zeile des Sensors 18 und teilt diese in zwei gleiche Hälften. Seitlich des Drehgehäuses 17 befindet sich ein Elektromotor 19, der mittels eines Treibriemens 20 das Drehgehäuse 17 mitsamt dem Pechan-Prisma 16 und dem Abbildungsobjektiv 15 in Rotation zu versetzen imstande ist, wobei die Rotationsachse des Prismas 16 mit seiner optischen Hauptachse und der Hauptachse 23 des Ringspiegels 10 zusammenfällt. Statt des Pechan-Prismas kann als Bilddrehungsoptik eine solche Einrichtung verwendet werden, die das Bild zu drehen imstande ist, wie Spiegelkonstruktionen oder weitere Drehprismen wie das Dove-Prisma.

Die Funktionsweise der Vorrichtung ist folgende: Das Beleuchtungs-Lichtbündel 14 der Lichtquelle 3 wird mittels des Teilerspiegels 6 umgelenkt und auf die Spiegelfläche 12 des Ringspiegels 10 geworfen, von wo es rings auf die abzutastende Oberfläche des Objektes 13 fällt, wobei die jeweiligen Extrempaare 14,14′ bzw. 14˝,14‴ der Randstrahlen des Ringspiegels 10 dargestellt sind. Vom Objekt 13 wird das Licht auf die Spiegelfläche 12 zurückgeworfen und in Richtung des Teilerspiegels 6 umgelenkt; objektseitig fallen das Beleuchtungs-Lichtbündel 14 und das Abbildungs-Lichtbündel 24 zusammen, welches den Teilerspiegel 6 und das Abbildungsobjektiv 15 durchquert und durch das Pechan-Prisma 16 gedreht wird und auf den in der Bildebene sich befindenden photoelektronischen Sensor 18 fällt, was in der Objektebene einer Abbildung der Sensorzeile 18 parallel der Mittellinie 23 des Objektes 13 auf der Oberfläche desselben entspricht. Die Drehung des Prismas 16 bewirkt eine Umfangsabtastung auf dem Objekt 13 dergestalt, daß die Pixelzeile des Sensors 18 der Oberfläche des Objektes 13 parallel zur Mittelachse 23 zugeordnet ist. Bei Drehung des Objektes und gleichzeitigem Verschieben in Richtung des Doppelpfeils 22 wird um das Objekt 13 ein spiralförmiges Abtastband gelegt. Die Drehung des Drehgehäuses 17 mitsamt dem Prisma 16 um seine optische Achse bewirkt den Parallelversatz des Abbildes 21 der Sensorzeile über den Objektum fang des Objektes 13, wobei die Ausrichtung des Abbildes 21 parallel zur Mittelachse des Objektes 13 beibehalten wird.

In Figur 1 ist der Strahlengang des Abbildungs-Lichtbündels 24 von einer Positionierung des Sensors 18 bestimmt, bei der die gerade Pixelzeile symmetrisch um die Mittelachse 23 in der Bildebene, das ist die Ebene des Sensors 18, liegt. Dementsprechend sind ein zentraler Pixelbereich der Stirnfläche des Objektes 13 und die beiden sich diametral gegenüberliegenden Außenbereiche der Sensorzeile der Mantelfläche des Objektes 13 zugeordnet; die Außenbereiche klappen gewissermaßen um die Kante der Deckfläche des zylindrischen Objektes 13 herum auf die Mantelfläche. Bei Sicherstellung einer ausreichenden Schärfentiefe durch das Abbildungsobjektiv 15 können also die Stirnfläche und ein Mantelflächenbereich des Objektes gleichzeitig abgetastet werden.

Durch die spezifischen optischen Gesetzmäßigkeiten des Pechan- oder Dove-Prismas oder anderer Bilddrehungseinrichtungen kann eine Verdoppelung der Abtastumdrehung bewirkt werden, was bei paarweiser Anordnung der Abtastbereiche eine Vervierfachung der möglichen Abtastgeschwindigkeit über den Umfang des Objektes bedeutet. Bei hoher Abtastfrequenz der Sensorzeile kann der Objektumfang in vorteilhafter Weise unabhängig vom Durchmesser des Objektes feinst aufgelöst werden. Dazu ist nur eine relativ geringe Umdrehungsgeschwindigkeit notwendig, z.B. 100 U/Minute, bei der schon eine feinauflösende Oberflächenabtastung mit hoher Abtastgeschwindigkeit erhalten wird.

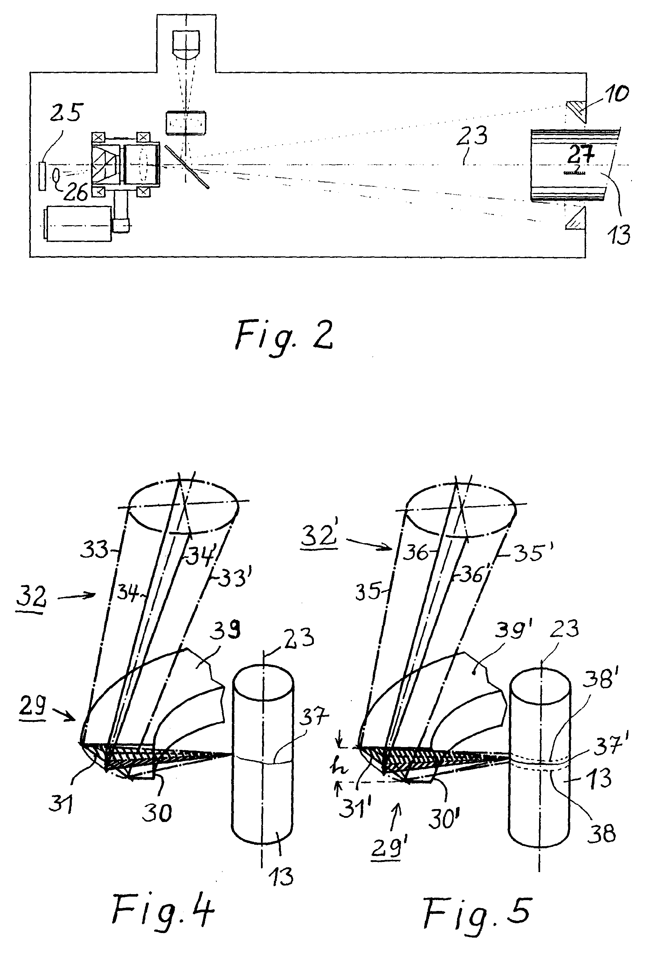

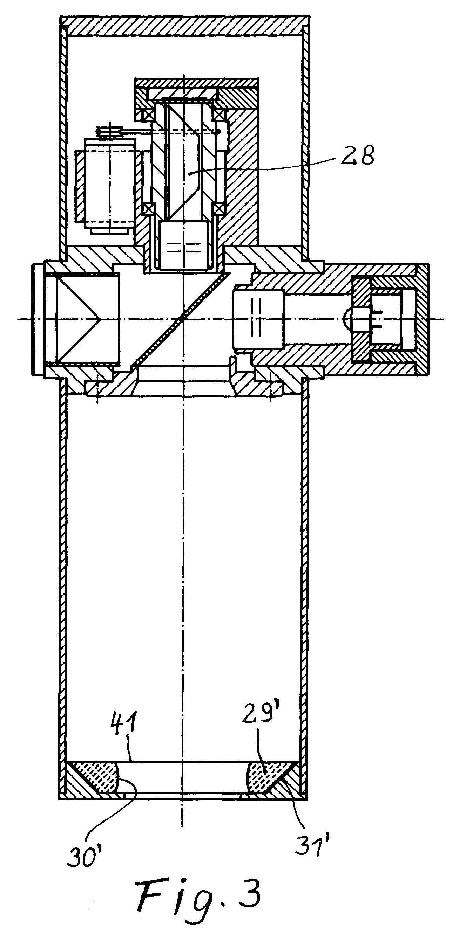

Figur 2 zeigt eine weitere Vorrichtung entsprechend der Figur 1, wobei gleiche Teile mit gleichen Bezugsziffern versehen sind. Der Strahlengang eines Abbildungs-Lichtbündels 26 wird von einer Positionierung eines Sensors 25 bestimmt, bei der nur noch die Verlängerungsgerade der geraden Pixelzeile die Mittelachse bzw. Hauptachse 23 schneidet. Die Übertragung auf das Objekt ergibt nur noch eine Abtastgerade auf der Mantelfläche des Objektes 13 in der Objektebene; die Stirnfläche des Objektes wird nicht mehr erfaßt.

Figur 3 zeigt eine Darstellung einer Vorrichtung entsprechend der Figur 1, wobei die Bilddrehungsoptik ein Dove-Prisma 28 ist. Die Vorrichtung besitzt einen spezifisch ausgeformten, ringförmigen Spiegelkörper 29, der in allen Vorrichtungen vorteilhaft verwendet werden kann, und der nachfolgend beschrieben ist.

Die Figuren 4 und 5 zeigen Teile von ringförmigen Spiegelkörpern 29, 29′ zur Vermeidung von Abbildungsfehlern, die aufgrund der Krümmung einer Spiegelfläche in tangentialer Richtung auftreten, wie es die Ringspiegel der vorgehend beschriebenen Figuren darstellen, weshalb sich die Randstrahlen nach ihrer Reflektion nicht in einem geometrischen Ort schneiden, der auf der Oberfläche des Objektes liegt, sondern in einem Ort, der außerhalb der Oberfläche des Objektes liegt; bei rotationssymmetrischen Spiegelkörpern sind die geometrischen Orte Kreise. Andere zwischen den Randstrahlen liegende Strahlen schneiden sich radial auf den Bündelmittellinien zwischen den geometrischen Orten, was einen Verzug der Schnittpunkte über die Achsen des Lichtbündels ergibt. Dieser Verzug ist bei einem Kegelspiegel am augenfälligsten, er tritt jedoch auch bei anderen Spiegelformen auf, die als Spiegelkörper gestaltet sind und bei denen die Spiegelfläche in einer Richtung gekrümmt ist.

In den Figuren 4 und 5 sind mit den Bezugsziffern 32, 32′ Lichtbündel mit radialen Randstrahlen 33, 33′, 35, 35′ und tangentialen Randstrahlen 34, 34′, 36, 36′ eines abzubildenden Objektpunktes des Objektes 13 mittels eines (nichtgezeigten) Objektives gezeigt. Die Spiegelkörper 29, 29′ bestehen je aus einem transparenten Körper in Form eines Toroids mit der Hauptachse 23, der durch je eine obere, vorzugsweise ebene, Oberfläche 39, 39′, eine rückseitige, schräg geneigte und in Richtung der Schräge ebene, innen verspiegelte, umlaufende Spiegelfläche 31, 31′ und eine umlaufende, der Hauptachse 23 der Spiegelkörper 29, 29′ zugewandte innere Oberfläche 30, 30′ der Höhe h begrenzt ist. In Figur 4 ist die Oberfläche 30 zylindrisch und stellt eine zylindrische Linsenfläche dar; in Figur 5 ist die Oberfläche 30′ konvex gewölbt.

Beispielsweise treffen sich in Figur 4 sowohl die radialen, als auch die tangentialen Randstrahlen 33, 33′, 34, 34′ auf einem geometrischen Ort, der eine kreisförmige Umfangslinie 37 auf dem Objekt 13 bildet. In Figur 5 schneiden sich die tangentialen Randstrahlen 36, 36′ in einem geometrischen Ort, der ebenfalls eine kreisförmige Umfangslinie 37′ auf dem Objekt 13 bildet; hingegen schneiden sich die radialen Randstrahlen 35, 35′ auf einem geometrischen Ort, der innerhalb des Objektes 13 liegt, so daß dieselben auf den gepunkteten Umfangslinien 38, 38′ des Objektes 13 auftreffen. Durch die konvexe Krümmung der Linsenfläche 30′ wird eine vorteilhafte Adaption der Abbildung an spezifische Erfordernisse des Objektes oder von marktüblichen Sensorgeometrien von CCD-Bausteinen an beispielsweise zylindrische oder runde oder sonstwie stabförmige Objekte oder allgemein der Geometrie des verwendeten optoelektronischen Sensors erreicht.

Des weiteren kann die rückseitige, schräg geneigte und in Richtung der Schräge ebene, umlaufend-innen verspiegelte Spiegelfläche halbdurchlässig sein, so daß diese einen Teilerspiegel zu bilden imstande ist. Die Beleuchtung des Objektes kann dann auch durch die halbdurchlässige Spiegelfläche und das transparente Toroid hindurch erfolgen.

Die dem Mittelpunkt des Spiegelkörpers zugewandte Linsenfläche kann in ihrer Krümmung in Richtung der Hauptachse des Spiegelkörpers veränderbar sein, dergestalt, daß die Brennweite der Linsenflächen veränderbar ist, um den Spiegelkörper an Objekte unterschiedlicher Geometrie, insbesondere an zylindrische Objekte mit unterschiedlichem Durchmesser, anzupassen. Dazu kann der Spiegelkörper aus flexiblem, transparentem Material bestehen und beispielsweise mit einer massiven, ringförmigen, transparenten Lochscheibe 41 abgedeckt sein. Wird auf die Lochscheibe, symmetrisch oder unsymmetrisch, ein Druck ausgeübt, so verformt sich der Spiegelkörper, wobei aufgrund der Volumenverkleinerung die innere, zylindrische Linsenfläche umlaufend bombiert wird und eine bezüglich der Richtung der Hauptachse konvexe, veränderbare Form annimmt, ähnlich der in Figur 3 gezeigten Gestaltung der Linsenfläche 30′.

### Gewerbliche Anwendbarkeit:

Das erfindungsgemäße Verfahren und die Vorrichtung sind vorteilhaft zum Abtasten von runden oder zylindrischen Objekten, vorzugsweise mit relativ großem Durchmesser, beispielsweise mehr als 50 mm, mittels hochauflösender Signalerzeugung zur Merkmalserkennung von Oberflächen, wie Muster oder Oberflächenfehlern, geeignet.

### Liste der Bezugszeichen:

- 1: Gehäuse
- 2: Gehäusearm
- 3: Lichtquelle
- 4: Blende
- 5: Beleuchtungs- oder Projektionsoptik
- 6: Strahlteilereinrichtung, z.B. Teilerspiegel
- 7: Lichtfalle
- 8: Deckel
- 9: Loch
- 10: ringförmiger Spiegelkörper
- 11: Durchgangsöffnung durch den Spiegelkörper
- 12: kegel- oder schalenförmige Spiegelfläche
- 13: Objekt
- 14,14′,14˝,14‴, 14˝˝: Beleuchtungs-Lichtbündel
- 15: Abbildungsobjektiv
- 16: Pechan-Prisma
- 17: Drehgehäuse
- 18: optoelektronischer Sensor (Zeilensensor)
- 19: Elektromotor
- 20: Treibriemen
- 21: Abbild der Sensorzeile auf der Mantelfläche des Objektes
- 22: Bewegungsdoppelpfeil
- 23: Hauptachse des ringförmigen Spiegelkörpers und Mittelachse des Objektes
- 24, 26: Abbildungs-Lichtbündel
- 25: Sensorzeile
- 27: Abbild der Sensorzeile auf dem Objekt
- 28: Dove-Prisma
- 29, 29′: ringförmige Spiegelkörper
- 30, 30′: innere Oberflächen
- 31, 31′: äußere, innen verspiegelte Spiegelfläche
- 32, 32′: Lichtbündel
- 33, 33′, 34, 34′, 35, 35′, 36, 36′: Randstrahlen
- 37, 37′, 38, 38′: geometrische Orte
- 39, 40: Oberflächen
- 41: transparente Lochscheibe

## Patentansprüche

1. Verfahren zum optischen Abtasten der Oberfläche eines rotationssymmetrischen Objektes (13), dessen Oberfläche Licht zu reflektieren oder zu streuen imstande ist, unter Verwendung einer Vorrichtung mit einem ringförmigen Spiegelkörper (10) mit kegel- oder schalenförmiger Spiegelfläche (12), die eine zentrisch angeordnete Durchgangsöffnung (11) aufweist, durch die das Objekt durchbewegt wird, wobei der Spiegelkörper das aus einer Lichtquelle (3) herrührende Beleuchtungs-Lichtbündel im wesentlichen radial zu seiner Hauptachse (23) auf das Objekt längs eines Umfangsbandes und umgekehrt umlenkt und das Abbildungs-Lichtbündel mittels eines Abbildungsobjektives (15) auf einen Sensor (18) mit einer elektrischen Auswerteeinrichtung fokussiert wird,
dadurch gekennzeichnet,
daß als Sensor ein geradliniger optoelektronischer Zeilensensor (18) verwendet wird, daß zwischen dem Objekt und dem Zeilensensor (18) eine Bilddrehungsoptik (16) angeordnet ist, die einerseits die Abtastung von aufeinanderfolgenden Umfangsbereichen des Objektes (13) zeitlich nacheinander bewirkt und andererseits die Drehung des vom Abbildungsobjektiv (15) erzeugten Abbildes (21,27) des Zeilensensors (18) auf dem Objektumfang derart kompensiert, daß das Abbild des Zeilensensors (18) auf dem Objektumfang unabhängig vom Drehwinkel (d.h. unabhängig vom gerade abgetasteten Bereich auf dem Objekt) in bezug auf die Längsachse (23) stets dieselbe Orientierung hat, vorzugsweise parallel zur Längsachse des Objektes geführt wird.

2. Verfahren nach Anspruch 1, dadurch gekennzeichnet,
daß der Strahlengang des Abbildungs-Lichtbündels (24,26) objektseitig vor oder nach dem Abbildungsobjektiv (15) gedreht wird.

3. Verfahren nach Anspruch 1 oder 2, dadurch gekennzeichnet,
daß das Beleuchtungs-Lichtbündel mittels einer Blende (4) konfiguriert wird und sowohl das konfigurierte Beleuchtungs-Lichtbündel als auch das Abbildungs-Lichtbündel synchron gedreht werden.

4. Vorrichtung zum optischen Abtasten der Oberfläche eines rotationssymmetrischen Objektes (13), dessen Oberfläche Licht zu reflektieren oder zu streuen imstande ist, mit einem ringförmigen Spiegelkörper (10) mit kegel- oder schalenförmiger Spiegelfläche (12), die zum Durchbewegen des Objektes (13) eine zentrisch angeordnete Durchgangsöffnung (11) aufweist, wobei der Spiegelkörper das aus einer Lichtquelle (3) herrührende Beleuchtungs-Lichtbündel im wesentlichen radial zu seiner Hauptachse (23) auf das Objekt längs eines Umfangsbandes und umgekehrt umlenkt und das Abbildungs-Lichtbündel mittels eines Abbildungsobjektives (15) auf einen Sensor (18) mit einer elektrischen Auswerteeinrichtung fokussierbar ist, dadurch gekennzeichnet,
daß der Sensor ein geradliniger optoelektronischer Zeilensensor (18) ist und daß zwischen dem Objekt und dem Zeilensensor zum Drehen des Strahlenganges des Abbildungs-Lichtbündels (2, 26) objektseitig vor oder nach dem Abbildungsobjektiv (15) eine Bilddrehungsoptik (16) sich beflndet, welche um ihre Hauptachse (23) drehbar angeordnet ist.

5. Vorrichtung nach Anspruch 4, dadurch gekennzeichnet,
daß die Bilddrehungsoptik eine Spiegeleinrichtung oder eine Kombination von Zylinderlinsen oder von Zylinderlinsen mit sphärischen Linsen oder ein Pechan-Prisma (16) oder ein Dove-Prisma ist, die bzw. das mittels eines Motors (19) drehbar um ihre bzw. seine Hauptachse (23) angeordnet ist, die mit der Hauptachse des Strahlengangs des Abbildungs-Lichtbündels (24) zusammenfällt.

6. Vorrichtung nach Anspruch 5, dadurch gekennzeichnet,
daß das Abbildungsobjektiv in die Kombination von Zylinderlinsen oder die Kombination von Zylinderlinsen mit sphärischen Linsen zur Bilddrehung integriert ist.

7. Vorrichtung nach Anspruch 4, dadurch gekennzeichnet,
daß sich das Abbildungsobjektiv objektseitig vor der Bilddrehungsoptik befindet und sowohl das Beleuchtungs-Lichtbündel als auch das Abbildungs-Lichtbündel durch die Bilddrehungsoptik geführt sind.

8. Vorrichtung nach Anspruch 1, dadurch gekennzeichnet,
daß die Lichtquelle (3) eine auf die Sensorgeometrie abgestimmte Blende (4) aufweist, die beispielsweise bei einem linienförmigen Sensor schlitzförmig ist, und Blende und Sensorzeile diametral zur Mittenachse der Bilddrehungsoptik bzw. der Abbildungs- und Bilddrehungsoptik angeordnet sind.

9. Vorrichtung nach Anspruch 4, dadurch gekennzeichnet,
daß der Sensor ein solcher mit parallelen Zeilen ist oder der Sensor aus mehreren Sensorzeilen besteht, die sternförmig angeordnet sind.

10. Vorrichtung nach Anspruch 4, dadurch gekennzeichnet,
daß die Hauptachse (23) der Bilddrehungsoptik (16) mittig die Sensorzeile (18) durchstößt, die symmetrisch zur Hauptachse in der Bildebene liegt, so daß ein zentraler Bereich des Sensors der Stirnfläche des Objektes und die beiden sich diametral gegenüberliegenden Außenbereiche des Sensors der Mantelfläche des Objektes zugeordnet sind und auf derselben zu liegen kommen.

11. Vorrichtung nach Anspruch 4, dadurch gekennzeichnet,
daß die Sensorzeile (25) soweit außermittig der Hauptachse (23) der Bilddrehungsoptik (16) angeordnet ist, daß die Hauptachse nur noch die Verlängerungsgerade der Sensorzeile schneidet und somit das Abbild der Sensorzeile nur noch eine Abtastgerade (21) auf der Mantelfläche des Objektes ergibt.

12. Vorrichtung nach Anspruch 4, dadurch gekennzeichnet,
daß der Sensor bzw. die Sensorzeile des Sensors außermittig und schräg zur Hauptachse der Bilddrehungsoptik liegt, so daß in der Bildebene die Sensorzeile bzw. deren Verlängerungsgerade die Hauptachse der Bilddrehungsoptik nicht schneidet und in der Objektebene das Abbild der Sensorzeile auf dem Objekt schräg zu dessen Mittelachse zu liegen kommt.

13. Vorrichtung nach Anspruch 4, dadurch gekennzeichnet,
daß der Spiegelkörper ein durchsichtiger Körper (29,29′) in Form eines Toroids ist, dessen äußere rückseitig-umlaufende, schräg geneigte Oberfläche als innen verspiegelte Spiegelfläche (31,31′) ausgebildet ist, wobei die der Hauptachse (23) des Spiegelkörpers (29,29′) zugewandte innere umlaufende Oberfläche als zylindrische oder als gewölbte Linsenfläche (30,30′) gestaltet ist.

14. Vorrichtung nach Anspruch 13, dadurch gekennzeichnet,
daß die innere umlaufende Linsenfläche (30′) konvex oder konkav gewölbt ist und daß gegebenenfalls die Brennweite und/oder die Wölbung der Linsenfläche in Richtung der Hauptachse des Spiegelkörpers veränderbar sind.

15. Vorrichtung nach Anspruch 13 oder 14, dadurch gekennzeichnet,
daß die äußere rückseitig-umlaufende, schräg geneigte Spiegelfläche (31,31′) halbdurchlässig als Teilerspiegel ausgeführt ist.

## Claims

1. Process to optically scan the surface of a rotation-symmetrical object (13) whose surface is capable of reflecting or scattering light, using a device with an annular mirror element (10) with a conical or saucer-shaped mirror surface (12) which has a centrally positioned passage opening (11) through which the object is moved, whereby the mirror element deflects the illumination light beam stemming from a light source (3), essentially radially to its main axis (23), onto the object along a circumferential band and vice versa, and the imaging light beam is focused by means of an imaging objective (15) onto a sensor (18) having an electric evaluation device,
characterized in that,
as the sensor, a straight-line optoelectronic line sensor (18) is used, in that, between the object and the line sensor (18), there is an image rotation lens (16) which, on the one hand, effectuates the scanning of consecutive circumferential areas of the object (13) one after another and, on the other hand, compensates for the rotation of the image (21, 27) of the line sensor (18) generated on the object circumference by the imaging objective (15) in such a way that the image of the line sensor (18) on the object circumference, independent of the angle of rotation (i.e. independent of the area on the object which has just been scanned), always has the same orientation with respect to the longitudinal axis, it preferably passes parallel to the longitudinal axis of the object.

2. Process according to Claim 1, characterized in that
the beam path of the imaging light beam (24, 26) is rotated on the object side in front of or behind the imaging objective (15).

3. Process according to Claim 1 or 2, characterized in that
the illumination light beam is configured by means of a diaphragm (4) and the configured illumination light beam as well as the imaging light beam are rotated synchronously.

4. Device to optically scan the surface of a rotation-symmetrical object (13) whose surface is capable of reflecting or scattering light, with an annular mirror element (10) with a conical or saucer-shaped mirror surface (12) which has a centrally positioned passage opening (11) for moving the object (13) through, whereby the mirror element deflects the illumination light beam stemming from a source of light (3) essentially radially to its main axis (23) onto the object along a circumferential band and vice versa, and the imaging light beam is focused by means of an imaging objective (15) onto a sensor (18) having an electric evaluation device,
characterized in that,
the sensor is a straight-line optoelectronic line sensor (18) and in that, between the object and the line sensor (18), there is an image rotation lens (16) for rotating the beam path of the imaging light beam (2, 26) on the object side in front of or behind the imaging objective (15), which is arranged so that it can rotate around its main axis (23).

5. Device according to Claim 4, characterized in that
the image rotation lens is a mirror arrangement or a combination of cylindrical lenses or of cylindrical lenses with spherical lenses or a Pechan prism (16) or a Dove prism which is/are arranged so that it/they can rotate around its/their main axis (23), which coincides with the main axis of the beam path of the imaging light beam (24).

6. Device according to Claim 5, characterized in that,
the imaging objective is integrated in the combination of cylindrical lenses or the combination of cylindrical lenses with spherical lenses for purposes of image rotation.

7. Device according to Claim 4, characterized in that
the imaging objective on the object side is located in front of the image rotation lens and both the illumination light beam as well as the imaging light beam pass through the image rotation lens.

8. Device according to Claim 1, characterized in that
the light source (3) has a diaphragm (4) adapted to the geometry of the sensor which is, for example, slit-shaped in the case of a linear sensor, and the diaphragm and the sensor line are arranged diametrically to the middle axis of the image rotation lens or of the imaging lens and image rotation lens.

9. Device according to Claim 4, characterized in that
the sensor is a sensor with parallel lines or else the sensor consists of several sensor lines which are arranged in a star-like pattern.

10. Device according to Claim 4, characterized in that the main axis (23) of the image rotation lens (16) passes through the middle of the sensor line (18) which is symmetrical to the main axis in the image plane so that a central area of the sensor is associated with the front surface of the object, and the two diametrically opposed outer areas of the sensor are associated with the circumferential surface of the object, and they come to rest upon them.

11. Device according to Claim 4, characterized in that
the sensor line (25) is arranged off-center from the main axis (23) of the image rotation lens (16) to such an extent that the main axis only intersects the extension line of the sensor line, and thus the image of the sensor line only generates a scanning straight line (21) on the circumferential surface of the object.

12. Device according to Claim 4, characterized in that
the sensor or the sensor line of the sensor is off-center and at an angle to the main axis of the image rotating lens so that, in the image plane, the sensor line or its extension straight line does not intersect the main axis of the image rotation lens and, in the object plane, the image of the sensor line comes to lie on the object at an angle to its middle axis.

13. Device according to Claim 4, characterized in that
the mirror element is a transparent element (29, 29′) in the shape of a toroid, whose outer rear-encircling, obliquely slanted surface is designed as a mirror surface (31, 31′) silvered on the inside, whereby the inner encircling surface of the mirror element (29, 29′) facing the main axis (23) is designed as a cylindrical or curved lens surface (30, 30′).

14. Device according to Claim 13, characterized in that
the inner encircling lens surface (30′) is curved so as to be either convex or concave and in that, optionally, the focal distance and/or the curvature of the lens surface can be changed in the direction of the main axis of the mirror element.

15. Device according to Claim 13 or 14, characterized in that
the outer rear-encircling, obliquely slanted mirror surface (31, 31′) is designed as a half-silvered divider mirror.

## Revendications

1. Procédé de balayage optique de la surface d'un objet à symétrie de révolution (13) dont la surface est en mesure de refléter ou de disperser la lumière, en utilisant un dispositif comprenant un corps à miroir annulaire (10) avec une surface réfléchissante (12) en forme de cône ou de coquille présentant une ouverture de passage centrée (11) servant au passage de l'objet, dans lequel le faisceau lumineux d'éclairage engendré par une source lumineuse (3) est projeté et reprojeté par le corps à miroir de façon sensiblement radiale par rapport à son axe principal (23) sur l'objet le long d'une bande circonférentielle, et le faisceau lumineux de reproduction est focalisé, au moyen d'un objectif de reproduction (15), sur un détecteur (18) avec une unité d'évaluation,
caractérisé en ce qu'
on utilise un détecteur à ligne optoélectronique rectiligne (18), qu'une optique de rotation de l'image (16) est disposée entre l'objet et le détecteur à ligne (18) laquelle, d'une part, balaye successivement les zones circonférentielles de l'objet (13) et, d'autre part, compense la rotation de la reproduction (21), 27) du détecteur à ligne (18) engendrée par l'objectif de reproduction (15) sur la circonférence de l'objet de sorte que, indépendamment de l'angle de rotation (à savoir indépendamment de la zone actuellement balayée de l'objet), la reproduction du détecteur à ligne (18) sur la circonférence de l'objet a toujours la même orientation par rapport à l'axe longitudinal (23), de préférence parallèle à l'axe longitudinal de l'objet.

2. Procédé suivant la revendication 1, caractérisé en ce que,
du côté objet, la rotation des rayons du faisceau lumineux de reproduction (24,26) s'effectue en amont ou en aval de l'objectif de reproduction (15).

3. Procédé selon l'une quelconque des revendications 1 et 2, caractérisé en ce que
le faisceau lumineux d'éclairage est configuré à l'aide d'un diaphragme (4) et que la rotation du faisceau lumineux d'éclairage configuré et celle du faisceau lumineux de reproduction s'effectuent de façon synchrone.

4. Dispositif de balayage optique de la surface d'un objet à symétrie de révolution (13) dont la surface est en mesure de refléter ou de disperser la lumière, comportant un un corps à miroir annulaire (10) avec une surface réfléchissante (12) en forme de cône ou de coquille présentant une ouverture de passage centrée (11) servant au passage de l'objet (13), dans lequel le faisceau lumineux d'éclairage engendré par une source lumineuse (3) est projeté et reprojeté par le corps à miroir de façon sensiblement radiale par rapport à son axe principal (23) sur l'objet le long d'une bande circonférentielle, et le faisceau lumineux de reproduction est focalisé, au moyen d'un objectif de reproduction (15), sur un détecteur (18) avec une unité d'évaluation, caractérisé en ce que
le détecteur est un détecteur à ligne optoélectronique rectiligne (18) et qu'une optique de rotation de l'image (16) tournant autour de son axe principal (23) est disposée entre l'objet et le détecteur à ligne, laquelle assure la rotation des rayons du faisceau lumineux de reproduction (2,26) du côté objet en amont ou en aval de l'objectif de reproduction (15).

5. Dispositif suivant la revendication 4, caractérisé en ce que
l'optique de rotation de l'image est un dispositif à miroirs ou une combinaison de lentilles cylindriques ou de lentilles cylindriques et sphériques ou un prisme de Pechan (16) ou un prisme de Dove pouvant tourner, à l'aide d'un moteur (19), autour de son axe principal (23) qui coïncide avec l'axe principal des rayons du faisceau lumineux de reproduction (24).

6. Dispositif selon la revendication 5, caractérisé en ce que
l'objectif de reproduction est incorporé dans la combinaison de lentilles cylindriques ou dans la combinaison de lentilles cylindriques et sphériques servant à la rotation de l'image.

7. Dispositif suivant la revendication 4, caractérisé en ce que,
du côté objet, l'objectif de reproduction se trouve devant l'optique de rotation de l'image et que le faisceau lumineux d'éclairage ainsi que le faisceau lumineux de reproduction passent à travers l'optique de rotation de l'image.

8. Dispositif selon la revendication 1, caractérisé en ce que
la source lumineuse (3) présente un diaphragme (4) adapté à la géométrie du détecteur et qui, dans le cas d'un détecteur linéaire, présente la forme d'une fente et que le diaphragme et la ligne détectrice sont disposés diamétralement par rapport à l'axe médian de l'optique de rotation de l'image ou de l'optique de reproduction et de rotation de l'image.

9. Dispositif suivant la revendication 4, caractérisé en ce que
le détecteur est un détecteur à lignes parallèles ou que le détecteur consiste en plusieurs lignes disposées en forme d'étoile.

10. Dispositif suivant la revendication 4, caractérisé en que
l'axe principal (23) de l'optique de rotation de l'image (16) passe à travers le centre de la ligne détectrice s'étendant de façon symétrique par rapport à l'axe principal dans le plan de l'image, de sorte qu'une zone centrale du détecteur est affectée à la face frontale de l'objet et que les deux zones extérieures diamétralement opposées du détecteur sont affectées à la surface latérale de l'objet et reposent sur celle-ci.

11. Dispositif suivant la revendication 4, caractérisé en ce que
la ligne détectrice (15) est disposée en dehors du centre de l'axe principal (23) de l'optique de rotation de l'image (16) de sorte que l'axe principal ne coupe que la droite de prolongement de la ligne détectrice et que, par conséquent, la reproduction de la ligne détectrice n'est qu'une droite de balayage (21) sur la face latérale de l'objet.

12. Dispositif suivant la revendication 4, caractérisé en ce que
le détecteur ou la ligne détectrice du détecteur est disposé en dehors du centre de l'axe principal de l'optique de rotation de l'image et obliquement par rapport à celui-ci, de sorte que, dans le plan de l'image, la ligne détectrice ou sa droite de prolongement ne coupe pas l'axe principal de l'optique de rotation de l'image et que, dans le plan de l'objet, la reproduction de la ligne détectrice se trouve sur l'objet, obliquement par rapport à son axe médian.

13. Dispositif suivant la revendication 4, caractérisé en ce que
le corps à miroir est un corps transparent (29,29′) toroïdal, dont la surface arrière extérieure inclinée faisant le pourtour est une surface réfléchissante (31,31′) métallisée à l'intérieur, la surface intérieure faisant le pourtour et tournée vers l'axe principal (23) du corps à miroir (29,29′) se présentant sous forme de lentille cylindrique ou courbe (30,30′).

14. Dispositif suivant la revendication 13, caractérisé en ce que
la surface lenticulaire intérieure faisant le pourtour (30′) est concave ou convexe et que, le cas échéant, la distance focale et/ou la courbure de la surface lenticulaire peuvent être variées en direction de l'axe principal du corps à miroir.

15. Dispositif suivant l'une quelconque des revendications 13 et 14, caractérisé en ce que
la surface réfléchissante (31,31′) arrière extérieure inclinée faisant le pourtour est un miroir diviseur semi-transparent.
